# EUROPÄISCHE PATENTANMELDUNG

(11) **EP 3 620 677 A1**
(43) Veröffentlichungstag der Anmeldung: **11.03.2020**
(21) Anmeldenummer: 19195301.7
(22) Anmeldetag: 04.09.2019
(51) Int. Cl.: F16D 13/64, F16D 13/68

(54) **MEHRSCHEIBENKUPPLUNG**

(30) Priorität: 06.09.2018 DE 102018215162
(71) Anmelder: ZF Friedrichshafen AG, 88046 Friedrichshafen (DE)
(72) Erfinder: Wittholz, Jan, 97506 Grafenrheinfeld (DE)

(57) **Zusammenfassung**

Mehrscheibenkupplung (10) umfassend zumindest einen Kupplungskorb (15) und in einer axialen Staffelung um eine gemeinsame Drehachse A, weiter eine Energiespeichereinrichtung (17), eine erste Zwischenplatte (21), eine erste Mitnehmerplatte (22), eine zweite Zwischenplatte (23), eine zweite Mitnehmerplatte und eine Nabe (30), wobei die Zwischenplatten (21; 23) drehfest und axial verschiebbar mit dem Kupplungskorb (15) verbunden ist, wobei die Mitnehmerscheiben (22; 24) drehfest und axial ver-schiebbar mit der Nabe (30) verbunden ist, wobei die Nabe (30) eine Außenverzahnung (31) aufweist, die in eine korrespondierende Innenverzahnung (41) der Mitnehmerplatten (22; 24) eingreift wobei die Nabe (30) eine Axialsicherung (35) vorsieht, wobei die Axialsicherung (35) sich nur teilweise über den Umfang der Nabe (30) erstreckt, wobei die Axialsicherung (35) und die Außenverzahnung (31) der Nabe (30) einen gemeinsamen Außendurchmesser (Da) aufweisen und wobei die Axialsicherung (30) einen Steg (37) umfasst, der zwei benachbarte Zähne (31a, 31b) der Außenverzahnung (31) in Umfangsrichtung verbindet, wobei der Steg (37) und die Nabe (30) aus einem gemeinsamen Halbzeug hergestellt sind.

## Beschreibung

Die Erfindung betrifft eine Reibungskupplung mit zumindest einem Kupplungskorb, einer Energiespeichereinrichtung in Form einer Membranfeder mit einer Anpressplatte sowie zwei oder mehreren Mitnehmerscheiben sowie axial gestaffelt dazu Zwischenscheiben und wobei ein in den Kupplungskorb eingebrachtes Drehmoment mittels der Reibscheiben über eine Nabe an beispielsweise ein Getriebe übertragen werden kann.

Mit der US 5 301 779 A ist eine Reibscheibenkupplung bekannt, die hier als Mehrscheibenkupplungen ausgeführt ist. Dabei ist ein Kupplungskorb an einer Schwungscheibe drehfest befestigt. An dem Kupplungskorb sind mehrere Zwischenscheiben drehfest und axial verschiebbar zu dem Kupplungskorb vorgesehen. Zwischen den Zwischenscheiben befinden sich Mitnehmerscheiben die verdrehbar zu den Zwischenscheiben angeordnet sind und radial innen mittels einer Verzahnung verdrehfest zu einer Nabe vorgesehen sind. Durch eine Membranfeder wird auf die mittels einer Anpressplatte wird auf die Zwischenscheiben und damit auch auf die Mitnehmerscheiben eine axiale Kraft aufgebracht. Hierdurch kann ein in den Kupplungskorb eingeleitetes Drehmoment über die Zwischenscheiben und Mitnehmerscheiben auf die Nabe übertragen werden. Radial innen an der Nabe befindet sich eine Verzahnung die vorgesehen ist beispielsweise auf eine Getriebeeingangswelle aufgesteckt zu werden. Dabei ist hier vorgesehen, dass eine axiale Sicherung der Nabe über die Mitnehmerscheiben erfolgt. Dabei ist vorgesehen, dass die Nabe im Bereich einer radiale Außenverzahnung die in die Verzahnung der Mitnehmerscheiben eingreift ein externes Bauteil, wie beispielsweise ein Stift, vorgesehen ist, wodurch die Nabe zwischen zwei Mitnehmerscheiben axial geführt wird.

Nachteilig ist, dass bei dieser Ausführungsform ein externes Bauelement benötigt wird um eine Axialsicherung der Nabe zu gewährleisten. Weiter muss dieses Bauteil gesichert werden, damit es im Betrieb der Reibungskupplung an der Nabe befestigt bleibt.

Die Aufgabe der vorliegenden Erfindung ist es, eine Reibungskupplung zu entwickeln, bei der die Axialsicherung der Nabe einfach herzustellen ist und kein zusätzliches Bauteil für die Axialsicherung benötigt wird. Dabei ist weiter darauf zu achten dass möglichst viele Gleichteile in der Reibscheibenkupplung verwendet werden können.

Erfindungsgemäß wird diese Aufgabe gelöst durch eine Mehrscheibenkupplung umfassend zumindest einen Kupplungskorb und in einer axialen Staffelung in einer gemeinsame Drehachse A weiter eine Energiespeichereinrichtung, eine erste Zwischenplatte, eine erste Mitnehmerplatte, eine zweite Zwischenplatte, eine zweite Mitnehmerplatte und eine Nabe, wobei die Zwischenplatten drehfest und axial verschiebbar mit dem Kupplungskorb verbunden sind, wobei die Mitnehmerscheiben drehfest und axial verschiebbar mit der Nabe verbunden sind, wobei die Nabe radial nach außen sich erstreckende Keilnuten aufweist, in die radial nach Innen sich erstreckende Zähne der Mitnehmerplatten eingreifen, wobei die Nabe eine Axialsicherung vorsieht, wobei die Axialsicherung sich nur teilweise über den Umfang der Nabe erstreckt, wobei die Axialsicherung der Keilnuten einen gemeinsamen Außendurchmesser aufweisen und wobei die Axialsicherung einen Steg umfasst, die zwei benachbarte Keilnuten in Umfangsrichtung verbindet, wobei der Steg und die Nabe aus einem gemeinsamen Halbzeug hergestellt sind.

Weiter kann es vorgesehen sein, dass mehrere Axialsicherungen über den Umfang verteilt angeordnet sind. Dabei kann es weiter vorteilhaft sein, wenn die Axialsicherungen über den Umfang gleichmäßig verteilt angeordnet sind. Es ist jedoch auch möglich, dass die mehreren Axialsicherung über den Umfang verteilt ungleichmäßig angeordnet sind. Eine besonders vorteilhafte Ausführungsform sieht vor, dass zumindest drei Axialsicherungen gleichmäßig über den Umfang verteilt vorgesehen sind. Dies ist auch vorteilhaft weil durch die gleichmäßige Verteilung der Axialsicherungen über den Umfang eine mögliche Unwucht, bedingt durch die Axialsicherung, wieder ausgeglichen werden kann.

Dabei kann es weiter vorgesehen sein, dass die zweite Zwischenplatte axial überlappend zu dem Steg eingebaut ist, wobei beidseitig der zweiten Zwischenplatte die erste und die zweite Mitnehmerscheibe vorgesehen sind. Dabei greifen die sich nach innen erstreckende Zähne der jeweiligen Mitnehmerplatten in die Keilnuten der Nabe. Dabei ist hier noch zu erwähnen, dass der Steg die Axialsicherung in zwei axiale Bereiche unterteilt. Dabei kann es weiter auch vorgesehen sein, dass die zwei axialen Bereiche, die durch den Steg in Bereich der Axialsicherung gebildet werden, eine jeweils gleiche axiale Erstreckung aufweisen oder zueinander eine unterschiedliche axiale Erstreckung aufweisen. Dabei kann es weiter vorgesehen sein, dass eine Stegbreite des Steges gleich oder geringer einer Breite der Zwischenplatte ist. Dies ist vorteilhaft, da es sich in axialer Überlappung zu der axialen Erstreckung des Steges, also der Stegbreite, sich die Zwischenplatte befindet. Dabei kann zum einen über die Stegbreite des Weges das Axialspiel der Nabe bestimmt werden.

Dabei kann es weiter vorgesehen sein, dass eine dritte oder mehrere Mitnehmerplatten vorgesehen sind, wobei alle Mitnehmerplatten baugleich ausgeführt sind. Durch die baugleiche Ausführung der Mitnehmerplatten kann eine kostengünstige Herstellung erreicht werden. Weiter ist durch die Verwendung von gleichen Mitnehmerplatten eine Verwechslungsgefahr beim Zusammenbau der Mehrscheibenkupplung gering oder sogar fast auszuschließen.

Weiter kann es vorgesehen sein, dass eine dritte oder mehrere Zwischenplatten vorgesehen sind, wobei alle Zwischenplatten baugleich ausgeführt sind. Auch hier kann durch gleiche Zwischenplatten eine kostengünstige Herstellung der Mehrscheibenkupplung erreicht werden und ebenso kann beim Zusammenbau die Verwechslungsgefahr verringert oder nahezu gegen 0 gebracht werden wenn möglichst viele Gleichteile als Zwischenplatten verwendet werden.

Weiter kann die Aufgabe durch ein Verfahren zur Herstellung einer Axialsicherung an einer Nabe eine Mehrscheibenkupplung gelöst werden nach einem der bereits vorangehend beschriebenen Ansprüche, wobei der Steg der Axialsicherung mittels eines Fräsvorganges durch einen Fräser aus der Nabe ausgebildet wird, wobei der Fräser ebenfalls die Keilnuten aus der Nabe ausbildet und, wobei der Fräsvorgang für den Steg und der Fräsvorgang für die Keilnuten in der gleichen Aufspannung erfolgt. Dabei ist hier noch zu erwähnen, dass die Axialsicherung aus der Nabe bzw. aus dem Nabenrohling ausgebildet wird. Dies bedeutet, dass für die Axialsicherung kein weiteres Bauteil verwendet wird, welches mit der Nabe verbunden werden muss. Das Verfahren ist besonders vorteilhaft, da zur Herstellung der Axialsicherung der gleiche Fräsvorgang und die gleiche Aufspannung der Nabe verwendet werden kann welche auch für die Ausbildung der Keilnuten der Nabe vorgesehen sind. Hierdurch können Werkzeug und Kosten reduziert werden. Des Weiteren ist das Verfahren zur Herstellung der Axialsicherung einer Nabe vorteilhaft da die Axialsicherung kein separates Bauteil erstellt darstellt, welches durch einen Verbindungsvorgang mit der eigentlichen Nabe verbindet werden müsste. Durch ein Verbindungsverfahren, egal welche Ausführung, kann es immer vorkommen, dass sich die Verbindung löst und das zu verbindende Bauteil sich von der Nabe ablöst oder abtrennt. Von daher ist das Verfahren zur Herstellung der Axialsicherung an der Nabe vorteilhaft bezüglich der Funktionssicherheit und der Ausfallwahrscheinlichkeit.

Anhand der folgenden Figurenbeschreibung soll die Erfindung näher erläutert werden.

Es zeigt:
- Fig. 1: Nabe mit einer Axialsicherung
- Fig. 2: Nabe aus der Figur 1 in einer Seitenansicht
- Fig. 3: Mehrscheibenkupplung in explodierter Darstellung

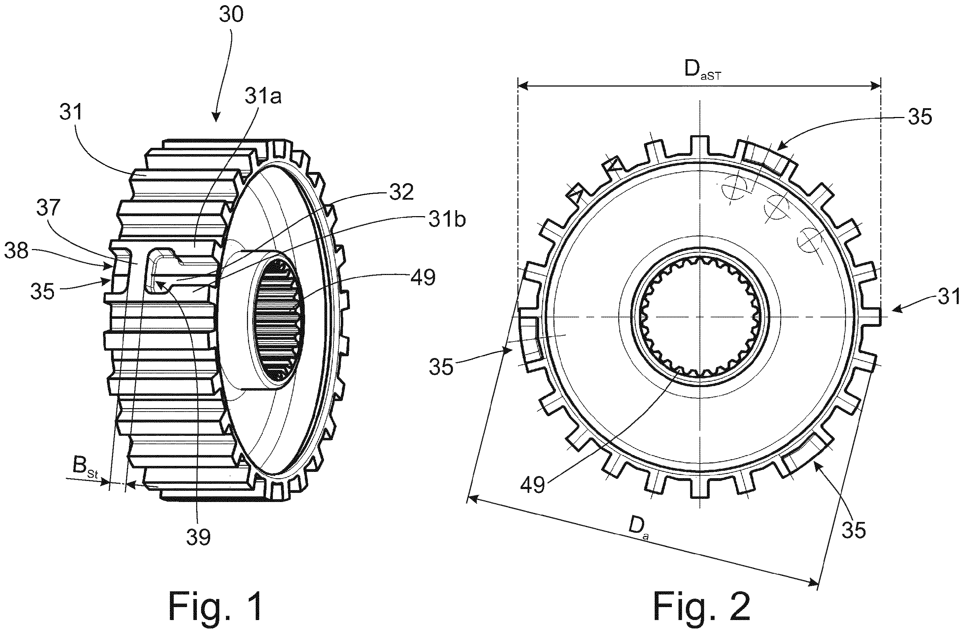

Die Figur 1 zeigt mit der Figur 2 eine Nabe 30 einer hier nicht dargestellten Mehrscheibenkupplung. Dabei ist radial außen an der Nabe 30 eine Außenverzahnung 31 vorgesehen. Dabei ist die Außenverzahnung 31 hier als auch eine bekannte Verzahnung ausgeführt. Weiter ist hier eine Axialsicherung 35 vorgesehen. Dabei wird die Axialsicherung 35 vornehmlich durch einen Steg 37 gebildet, wobei der Steg 37 in Umfangsrichtung der Nabe verläuft und zwei benachbarte Zähne 31a und 31b der Außenverzahnung 31 miteinander verbindet. Dabei ist ein Außendurchmesser des Steges DaSt gleich einem Außendurchmesser Da der Außenverzahnung 31. Durch den Steg 37 wird die sonst hier durchgängige Keilnut 32 unterbrochen. Dabei bildet sich in axialer Richtung gesehen ein erster Sicherungsbereich 38 und durch den Steg 37 beabstandet ein zweiter Sicherungsbereich 39. Dabei sei hier erwähnt, dass zur Herstellung der beiden Sicherungsbereiche 38, 39 der gleiche Fräser verwendet wird wie er auch für die Keilnut 32 verwendet wird. Hierdurch können in vorteilhafterweise Bearbeitungskosten eingespart werden. Auch können Bearbeitungskosten eingespart werden, da die Bearbeitung der Axialsicherung 35 mittels des Fräsvorganges in der selben Aufspannung durchgeführt werden kann wie die komplette Außenverzahnung 31. Der Vollständigkeit halber sei erwähnt, jedoch erst nachfolgend in den Figuren näher gezeigt, dass in die jeweiligen Sicherungsbereiche 38 und 39 die Innenverzahnung der jeweiligen Mitnehmerplatten eingreift. Des Weiteren ist hier in der Figur 1, sowie in der Figur 2, radial innen eine Innenverzahnung 49 zu erkennen, die in eine hier nicht dargestellten korrespondierende Außenverzahnung für beispielsweise eine Getriebeeingangswelle eingreifen kann. Weiter ist hier anzumerken, dass zur Vermeidung von Unwucht die Axialsicherung 35 über den Umfang gesehen drei Mal vorgesehen ist, wobei die Verteilung über den Umfang gleichmäßig, also drei Mal 120 Grad erfolgt.

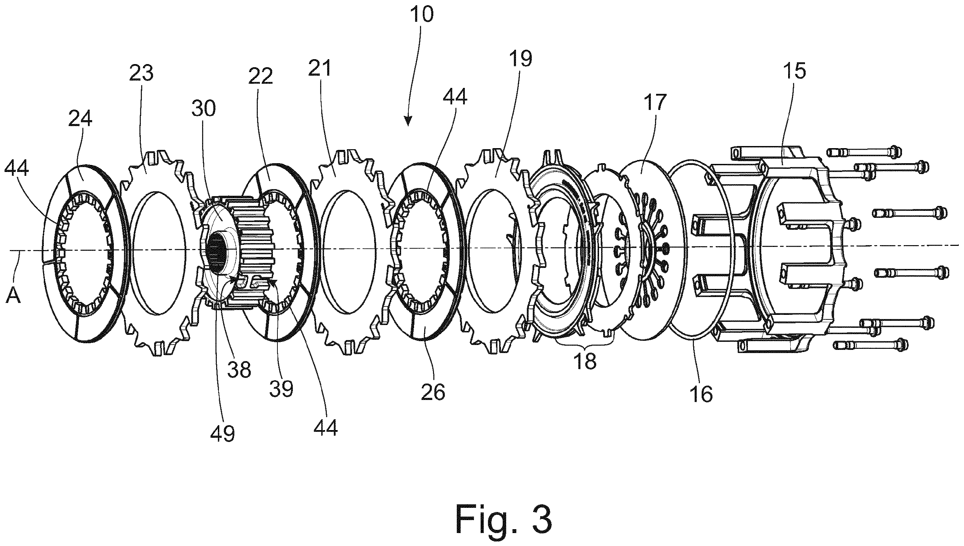

Die Figur 3 zeigt eine Mehrscheibenkupplung 10 in explodierter Ansicht. Dabei sind hier in axialer Staffelung folgende Bauteile, die alle drehbar um eine Drehachse A angeordnet sind, wie folgt axial gestaffelt und koaxial zur Drehachse A angeordnet dargestellt. Ein Kupplungskorb 15 der mit einer hier nicht dargestellten Schwungscheibe befestigt werden kann, sowie in weiterer axialer Staffelung ein Schneidenring 16 sowie eine Energiespeichereinrichtung 17 in Form einer Membranfeder dann weiter nachfolgend eine zweiteilige Anpressplatte 18 sowie in weiterer axialer Anordnung eine Zwischenplatte 19 sowie eine Mitnehmerplatte 26, eine weitere Zwischenplatte 21, eine weitere Mitnehmerplatte 22, eine Nabe 30, eine weitere Zwischenplatte 21 sowie eine weitere Mitnehmerplatte 26. Dabei erfolgt die Drehmomentübertragung in bekannter Form. Ein Drehmoment, welches mit dem Kupplungskorb 15 eingeleitet wird, wird über die Zwischenplatte 19, 21 und 23 die alle mit dem Kupplungskorb 19 drehfest axial verschiebbar verbunden sind mittels Reib- bzw. Kraftschluss auf die Mitnehmerplatten 22, 24, 26 übertragen, wobei die Mitnehmerplatten 22 ,24, 26 mittels einer Innenverzahnung 44 drehfest und axial verschiebbar zur Nabe 30 verbunden sind. Über die Innenverzahnung 49 der Nabe 30 gelangt das in den Kupplungskorb eingeleitet Drehmoment an eine hier nicht dargestellte Getriebeeingangswelle, die in die Innenverzahnung 49 der Nabe 30 eingeführt wird. Die Axialsicherung 35, die bereits in den Figuren 1 und 2 beschrieben wurde, wird dadurch erreicht, dass zum einen hier auf dem zweiten Sicherungsbereich 39 die Innenverzahnung der Mitnehmerplatte 22 eingreift sowie in den ersten Sicherungsbereich 38 die Innenverzahnung der Mitnehmerplatte 24. Dies bedeutet, dass beidseitig des Steges 37 sich die Verzahnung der jeweiligen Mitnehmerplatte 22 und 24 befinden. Die Mitnehmerplatten wiederum werden in axialer Position durch die Zwischenplatten 21 und 23 und die hier nicht dargestellte Schwungscheibe gehalten. Im eingebauten Zustand ist der axiale Verschiebeweg der Nabe 30 durch den Abstand der Verzahnungen 44 der beiden Mitnehmerscheiben 22, 24 abzüglich der Stegbreite bestimmt. Wird ein sehr geringer axialer Verschiebeweg der Nabe 30 gewünscht, so ist der Abstand der Innenverzahnung der Mitnehmerplatten 22, 24 nahezu gleich der Stegbreite.

### Bezuqszeichen

- 10: Mehrscheibenkupplung
- 15: Kupplungskorb
- 16: Schneidenring
- 17: Energiespeichereinrichtung
- 18: zweiteilige Anpressplatte
- 19: Zwischenplatte
- 21: erste Zwischenplatte
- 22: erste Mitnehmerplatte
- 23: zweite Zwischenplatte
- 24: zweite Mitnehmerplatte
- 26: Mitnehmerplatte
- 30: Nabe
- 31: Außenverzahnung
- 31a: Zahn
- 31b: Zahn
- 32: Keilnut
- 35: Axialsicherung
- 37: Steg
- 38: erster Sicherungsbereich
- 39: zweiter Sicherungsbereich
- 41: Innenverzahnung
- 44: Innenverzahnung
- 49: Innenverzahnung
- Bst: Stegbreite
- Bzw: Breite der Zwischenplatte
- Da: Außendurchmesser Verzahnung
- DaSt: Außendurchmesser Steg

## Patentansprüche

1. Mehrscheibenkupplung (10) umfassend zumindest einen Kupplungskorb (15) und in einer axialen Staffelung um eine gemeinsame Drehachse A, weiter eine Energiespeichereinrichtung (17), eine erste Zwischenplatte (21), eine erste Mitnehmerplatte (22), eine zweite Zwischenplatte (23), eine zweite Mitnehmerplatte und eine Nabe (30), wobei die Zwischenplatten (21; 23) drehfest und axial verschiebbar mit dem Kupplungskorb (15) verbunden ist, wobei die Mitnehmerscheiben (22; 24) drehfest und axial verschiebbar mit der Nabe (30) verbunden ist, wobei die Nabe (30) eine Außenverzahnung (31) aufweist, die in eine korrespondierende Innenverzahnung (41) der Mitnehmerplatten (22; 24) eingreift,
**dadurch gekennzeichnet, dass** die Nabe (30) eine Axialsicherung (35) vorsieht, wobei die Axialsicherung (35) sich nur teilweise über den Umfang der Nabe (30) erstreckt, wobei die Axialsicherung (35) und die Außenverzahnung (31) der Nabe (30) einen gemeinsamen Außendurchmesser (Da) aufweisen und wobei die Axialsicherung (30) einen Steg (37) umfasst, der zwei benachbarte Zähne (31a, 31b) der Außenverzahnung (31) in Umfangsrichtung verbindet, wobei der Steg (37) und die Nabe (30) aus einem gemeinsamen Halbzeug hergestellt sind.

2. Mehrscheibenkupplung (10) nach Anspruch 1, **dadurch gekennzeichnet, dass** mehrere Axialsicherungen (35) über den Umfang verteilt angeordnet sind.

3. Mehrscheibenkupplung (10) nach Anspruch 2, **dadurch gekennzeichnet, dass** zumindest drei Axialsicherungen (35) gleichmäßig über den Umfang verteilt vorgesehen sind.

4. Mehrscheibenkupplung (10) nach einem der vorangehenden Ansprüche, **dadurch gekennzeichnet, dass** die zweite Zwischenplatte (23) axial überlappend zu dem Steg (37) eingebaut ist, wobei beidseitig der zweiten Zwischenplatte (23) die erste und die zweite Mitnehmerscheibe (22; 24) vorgesehen sind.

5. Mehrscheibenkupplung (10) nach einem der vorangehenden Ansprüche, **dadurch gekennzeichnet, dass** eine Stegbreite (Bst) des Steges (37) gleich oder geringer einer Breite (Bzw) der Zwischenplatte (23) ist.

6. Mehrscheibenkupplung (10) nach einem der vorangehenden Ansprüche, **dadurch gekennzeichnet, dass** eine dritte oder mehrere Mitnehmerplatten (22; 24; 26) vorgesehen sind, wobei alle Mitnehmerplatten (22; 24; 26) baugleich ausgeführt sind.

7. Mehrscheibenkupplung (10) nach einem der vorangehenden Ansprüche, **dadurch gekennzeichnet, dass** eine dritte oder mehrere Zwischenplatten (19, 21; 23) vorgesehen sind, wobei alle Zwischenplatten (19; 21; 23) baugleich ausgeführt sind.

8. Verfahren zur Herstellung einer Axialsicherung (35) an einer Nabe (37) einer Mehrscheibenkupplung (10) nach einem der Ansprüche 1 bis 7, **dadurch gekennzeichnet, dass** der Steg (37) der Axialsicherung (35) mittels eines Fräsvorganges durch einen Fräser aus der Nabe (30) ausgebildet wird, wobei der Fräser ebenfalls die Außenverzahnung (31) aus der Nabe (30) ausbildet und wobei der Fräsvorgang für den Steg (37) und der Fräsvorgang für die Außenverzahnung (31) in der gleichen Aufspannung erfolgt.
